# FASCICULE DE BREVET EUROPEEN

(11) **EP 0 633 182 B1**
(45) Date de publication et mention de la délivrance du brevet: **08.01.1997**
(21) Numéro de dépôt: 94401551.0
(22) Date de dépôt: 06.07.1994
(51) Int. Cl.: B62D 21/15, B62D 25/02, B62D 29/00

(54) **Elément de structure, notamment pour véhicule, comprenant une plaque en métal relativement léger et mou, et procédé s'y rapportant**
Strukturbauteil, insbesondere für Automobile, mit einem verhältnismässig leichten und weichen Metall und Verfahren zur Herstellung
Structural element, especially for a vehicle, comprising a relatively light and soft metal sheet, method for making it

(30) Priorité: 07.07.1993 FR 9308353
(43) Date de publication de la demande: 11.01.1995
(73) Titulaire: SEB S.A., F-69130 Ecully (FR)
(72) Inventeur: Flammang, Denis, F-74150 Rumilly (FR)
(74) Mandataire: Keib, Gérard

(56) Documents cités:
- EP-A- 0 497 209
- FR-A- 664 251
- US-A- 2 237 623
- ATZ, vol.83, no.12, Décembre 1981 pages 655 - 662 KOEWIUS 'ZUM STAND DER ALUMINIUMANWENDUNG IM AUTOMOBIL VOR DEM HINTERGRUND DER KRAFTSTOFF-VERBRAUCHSSENKUNG AM BEISPIEL DER USA'
- PATENT ABSTRACTS OF JAPAN vol. 6, no. 36 (M-115) 5 Mars 1982 & JP-A-56 153 137 (YOKOHAMA RUBBER CO) 27 Novembre 1981

## Description

La présente invention vise un élément de structure, notamment pour véhicule, comprenant une plaque réalisée en un premier métal ou alliage relativement léger et mou. Elle vise aussi un procédé s'y rapportant et destiné à améliorer les propriétés d'un tel élément de structure.

La présente invention concerne notamment les véhicules terrestres, aériens ou maritimes. Le plus souvent, la carrosserie, le fuselage ou la coque de ces véhicules est constitué en grande partie de tôles minces assemblées entre elles.

Dans l'automobile par exemple, la carrosserie est notamment constituée de tôles en acier dont l'épaisseur est voisine d'un millimètre et qui sont serties, soudées ou rivetées.

Toutefois, l'acier présente deux inconvénients majeurs: sa masse volumique est importante, ce qui le rend relativement lourd. De plus, il est très sensible à la corrosion. Bien entendu, l'acier peut être soumis à différents traitements de surface ou encore avoir une composition chimique augmentant sa résistance à la corrosion. Toutefois, le succès de ces méthodes anticorrosions est souvent partiel et la corrosion est en général inévitable à long terme.

Il est connu par ailleurs de remplacer l'acier par de l'aluminium, notamment pour les véhicules aériens. En effet, l'aluminium est relativement léger et est très peu sensible à la corrosion. Cependant, la résistance mécanique de l'aluminium est faible, de sorte qu'il est relativement mou.

Pour donner à la plaque en aluminium une résistance mécanique comparable à la plaque en acier, il faut donc augmenter sensiblement son épaisseur, ce qui en retour, augmente le poids de la plaque et augmente son prix de revient.

C'est pourquoi le but de l'invention est de pallier ces inconvénients et de réaliser des éléments de structure, présentant une résistance mécanique accrue pour une épaisseur faible, qui soient légers et peu coûteux.

L'invention vise donc un élément de structure, notamment pour véhicule comprenant une plaque réalisée en un premier métal ou alliage relativement léger et mou.

Selon l'invention, l'élément de structure se caractérise en ce que la plaque présente sur une de ses faces dans une zone limitée prédéterminée de ladite face une pièce ayant la forme d'une feuille ajourée ou d'une grille réalisée en un second métal ou alliage plus dur que celui de la plaque, ladite pièce étant fixée à la plaque par matriçage à froid, de sorte que le métal de la plaque pénètre dans les ouvertures de la pièce.

La pièce est fixée dans une zone limitée de la face de la plaque. Le poids total de l'élément de structure n'est donc pas augmenté sensiblement. Néanmoins, grâce à la résistance du métal dur, la pièce contribue à augmenter considérablement la résistance mécanique de l'élément de structure, principalement dans la zone de fixation.

L'élément conserve donc en grande partie les avantages du premier métal, notamment sa légèreté et éventuellement son insensibilité à la corrosion tout en présentant une résistance mécanique accrue.

L'invention permet donc de renforcer localement la résistance mécanique de l'élément de structure sans augmenter sensiblement son poids ni son coût total. De plus, il n'est pas nécessaire de donner à la pièce matricée une épaisseur importante. On pourra même souvent lui donner une épaisseur sensiblement plus faible que celle de la plaque.

En outre, la fixation de la pièce comme indiqué, assure un ancrage simple et robuste de la pièce dans la plaque et une très bonne liaison mécanique entre les deux métaux. Au contraire, on sait qu'il est très délicat de souder de l'acier sur de l'aluminium, la résistance de la liaison ainsi réalisée étant souvent précaire. De même, l'assemblage de l'acier et de l'aluminium par rivetage n'assurerait pas une liaison mécanique continue des deux métaux et la présence des rivets génèrerait des surépaisseurs.

Selon une version avantageuse de l'invention, au moins une partie de la pièce présente une densité de perforation inférieure à d'autres parties de la pièce.

Par densité de perforation, on désigne le rapport sur une partie de surface donnée de la pièce, entre la surface couverte par les perforations ou ouvertures et la surface totale de la partie. Ainsi, la densité de perforation est forte lorsque les perforations ou ouvertures sont nombreuses et/ou ont des dimensions importantes. La densité est faible dans les cas contraires.

Les parties à faible densité de perforation donnent une résistance mécanique particulièrement forte aux parties de la plaque dans lesquelles elles sont ancrées, car la proportion d'acier en masse y est importante. Au contraire, les parties à faible densité de perforation augmentent modérément la résistance de l'élément de structure. On peut donc renforcer davantage la résistance des parties de la plaque qui seront soumises à des contraintes particulièrement élevées.

De plus, il est en général plus commode d'adapter la pièce aux contraintes subies par l'élément en variant localement la densité de perforation plutôt qu'en variant localement l'épaisseur de la pièce.

Par commodité, l'expression "densité de perforation" sera utilisée y compris lorsque les ouvertures de la pièce ne résultent pas d'une opération de perforation, par exemple dans le cas d'une grille constituée de fils entrelacés

Selon une version préférée de l'invention, le premier métal est de l'aluminium et le second métal est de l'acier.

Selon une autre version avantageuse, la plaque présente au moins deux desdites pièces, ces deux pièces étant séparées l'une de l'autre.

L'invention vise également un procédé pour améliorer les propriétés d'un élément de structure, notamment pour véhicule, comprenant une plaque réalisée en un premier métal ou alliage relativement léger et mou.

Selon l'invention, ce procédé comprend une étape consistant à fixer dans une zone limitée prédéterminée d'une des faces de la plaque une pièce ayant la forme d'une feuille ajourée ou d'une grille réalisée en un second métal en alliage plus dur que celui de la plaque, cette fixation étant effectuée par matriçage à froid, de sorte que le métal de la plaque pénètre dans les ouvertures de la pièce.

Les avantages de ce procédé correspondent à ceux précités de l'élément de structure selon l'invention.

Selon une version avantageuse, si la plaque subit une opération de matriçage pour lui donner une forme prédéterminée, la fixation de la pièce a lieu durant ladite opération de matriçage.

D'autres caractéristiques et avantages de l'invention apparaîtront encore dans la description qui va suivre de plusieurs modes de réalisation de l'invention. Aux dessins annexés:
- la figure 1 est une vue en élévation d'un élément de structure selon l'invention;
- la figure 2 est une vue en élévation d'un autre élément de structure selon l'invention;
- la figure 3 est une vue du détail D des grilles représentées sur les figures 1 et 2;
- la figure 4 est une vue en coupe selon le plan IV-IV de la figure 3;
- la figure 5 est une vue en coupe suivant le plan V-V du détail D des figures 1 et 2;
- la figure 6 est une variante de réalisation du dispositif de la figure 5;
- la figure 7 est une vue en élévation d'un autre élément de structure selon l'invention;
- la figure 8 est une vue en élévation d'une variante de réalisation de la pièce de la figure 3;
- la figure 9 est une vue en coupe suivant le plan IX-IX de la figure 8;
- les figures 10 et 11 sont des vues en élévation d'un mode de mise en oeuvre du procédé selon l'invention.
- la figure 12 est une variante de réalisation de la pièce de la figure 8.

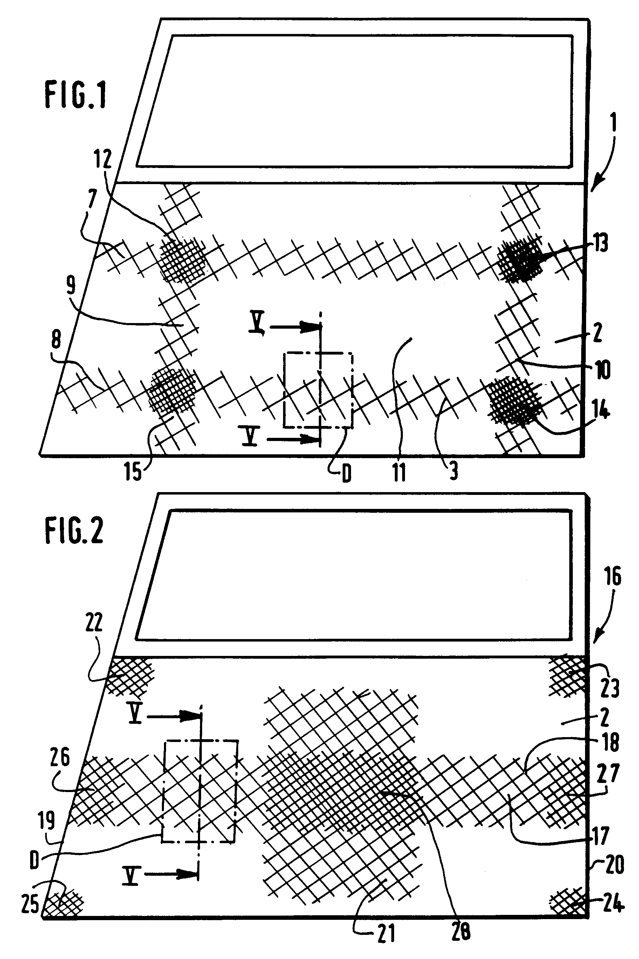

Un premier mode de réalisation d'un élément de structure conforme à l'invention est présenté sur la figure 1. Cet élément 1 constitue ici la partie métallique extérieure d'une portière de voiture.

L'élément 1 comprend une plaque 2 réalisée en un premier métal ou alliage relativement léger et mou, par exemple en l'aluminium.

Selon l'invention, sur la face intérieure de la plaque 2, visible en élévation sur la figure 1, la plaque 2 présente une pièce 3 fixée sur une zone limitée prédéterminée de ladite face.

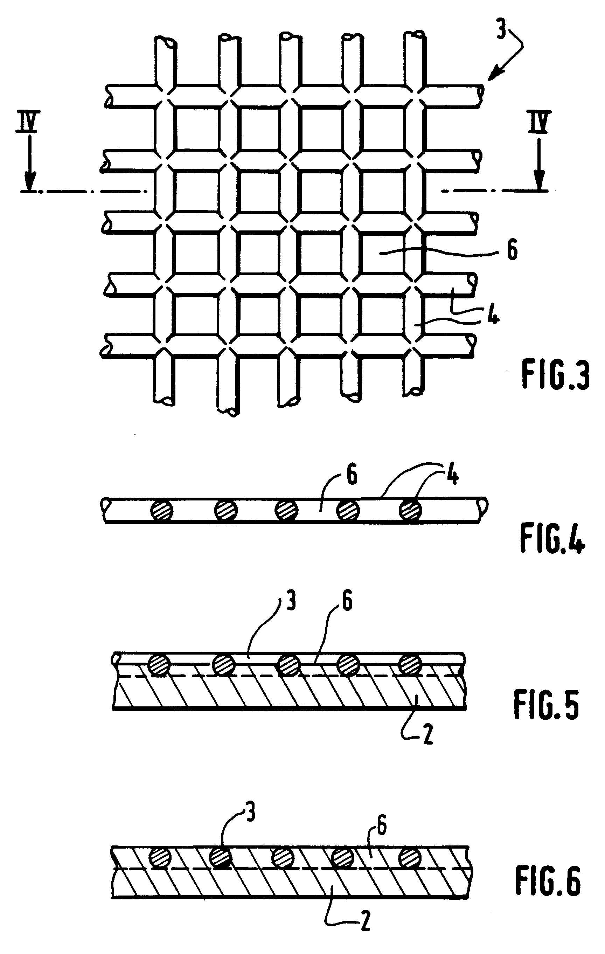

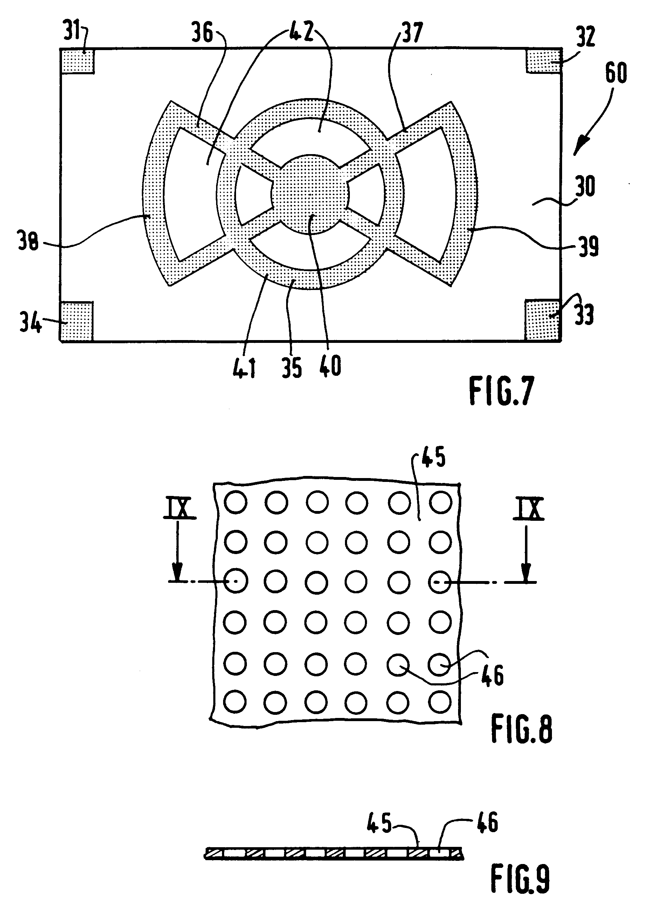

Comme le montrent les figures 3 et 4 qui représentent un détail de la pièce 3, la pièce 3 a, dans cet exemple, la forme d'une grille et est réalisée en un second métal ou alliage plus dur que celui de la plaque 2. Dans le présent exemple, ce second métal est de l'acier.

Dans le présent exemple, la grille 3 est constituée d'une tôle perforée.

La grille 3 pourrait également être constituée de fils entrelacés.

Selon l'invention, la pièce 3 est fixée à la plaque 2 par matriçage à froid, de sorte que le métal de la plaque 2 pénètre dans les ouvertures de la pièce 3.

Sur la figure 5, on voit ainsi que le métal de la plaque 2 a flué à l'intérieur des ouvertures 6 de la pièce 3, de sorte que celle-ci est encastrée sur la moitié de son épaisseur dans la plaque 2.

Dans la variante de réalisation présentée à la figure 6, la pièce 3 a été complètement encastrée dans la plaque 2 dont le métal a comblé les ouvertures 6 de la pièce 3. La pièce 3 ne dépasse plus de la face supérieure de la plaque 2.

Bien entendu, hormis ces deux exemples, différentes profondeurs d'encastrement de la pièce 3 dans la plaque 2 sont envisageables.

La grille 3 comprend quatre bandes 7, 8, 9, 10 entrecroisées, deux bandes 7 et 8 étant horizontales et deux bandes 9 et 10 étant verticales. Ainsi, la pièce 3 présente une partie centrale évidée 11. En variante, la pièce 3 pourrait aussi être consituée d'une grille d'un seul tenant évidée en partie centrale.

Les parties 12, 13, 14, 15 de la grille 3, situées aux intersections des bandes 7, 8, 9 et 10 présentent donc une densité de perforation inférieure aux autres parties de la grille 3. La surface des ouvertures est donc réduite par rapport aux autres parties de la grille 3.

Sur les figures 1, 2 et 7, la grille a été représentée de façon schématique. En particulier, on a représenté la différence de densité de perforation par des différences de densité de hachure. Il va de soi que ces hachures ne représentent pas exactement les fils de la grille.

Dans le cas d'une grille constituée de fils entrelacés, on peut également réduire la densité de perforation de certaines zones en réduisant localement la maille des entrelacements, c'est-à-dire en augmentant localement le nombre de fils.

La plaque 2 peut par ailleurs subir au moins une opération d'emboutissage destinée à lui donner une forme particulière prédéterminée en rapport avec la fonction de l'élément de structure. Cette opération peut avoir lieu après fixation de la pièce ou simultanément à cette fixation comme on le verra plus loin. Cette opération peut encore précéder la fixation de la pièce. Dans ce cas, la pièce aura avantageusement une forme adaptée à celle de la plaque. Elle aura par exemple été également emboutie pour lui donner une forme correspondant à celle de la plaque.

La figure 2 présente un autre mode de réalisation de l'invention, analogue à celui de la figure 1.

L'élément 16 constitue également la partie métallique extérieure d'une portière de voiture et comprend une plaque 2 identique à celle de la figure 1.

La plaque 2 présente sur sa face intérieure une grille 17 analogue à la grille 3.

La grille 17 a la forme générale d'une croix fixée sur une zone située sensiblement au centre de la partie inférieure de la plaque 2. La grille 17 comprend une bande horizontale 18 s'étendant d'un bord 19 à l'autre 20 de la plaque 2 et une bande verticale 21 perpendiculaire à la bande 18.

En plus de la grille 17, la plaque 2 présente quatre autres grilles analogues 22, 23, 24, 25 séparées les unes des autres. Ces quatre grilles sont fixées sur la même face de la plaque 2 que la grille 17, respectivement aux quatre coins de la partie inférieure de la face de la plaque 2. Ainsi, ces quatre grilles sont fixées sur des zones voisines des bords de la plaque 2, de même que les extrémités 26 et 27 de la bande horizontale 18.

La partie 28 de la croix correspondant à l'intersection des bandes horizontale et verticale, les extrémités 26 et 27 et les parties 22, 23, 24, 25 présentent une densité de perforation inférieure aux autres parties de la grille 17.

La figure 7 présente un autre mode de réalisation de l'invention. L'élément 60 est constitué d'une plaque 30 rectangulaire en aluminium. Sur une face de celle-ci ont été fixées par matriçage à froid quatre grilles 31, 32, 33, 34 respectivement aux quatre coins de la plaque ainsi qu'une grille 35 sur une zone située sensiblement au centre de la plaque.

La grille 35 a la forme suivante: elle présente deux bandes 36 et 37 disposées sensiblement suivant les diagonales du rectangle. Deux bandes 38, 39 en arc de cercle joignent respectivement les extrémités de chaque bande les plus proches l'une de l'autre. La grille a la forme d'un disque 40 au point d'intersection des bandes 36 et 37. Elle présente entre les deux bandes 38 et 39 un cercle 41 concentrique au disque 40 et distant de celui-ci.

La grille 35 présente donc six parties évidées 42.

Alternativement, les grilles 31, 32, 33, 34 peuvent être fixées aux quatre coins de la plaque sur la face opposée à celle qui présente la grille 35, de sorte que les grilles sont fixées sur des faces différentes de la plaque 30.

Les grilles 31, 32, 33, 34, 35 sont en métal plus dur que l'aluminium, par exemple en acier.

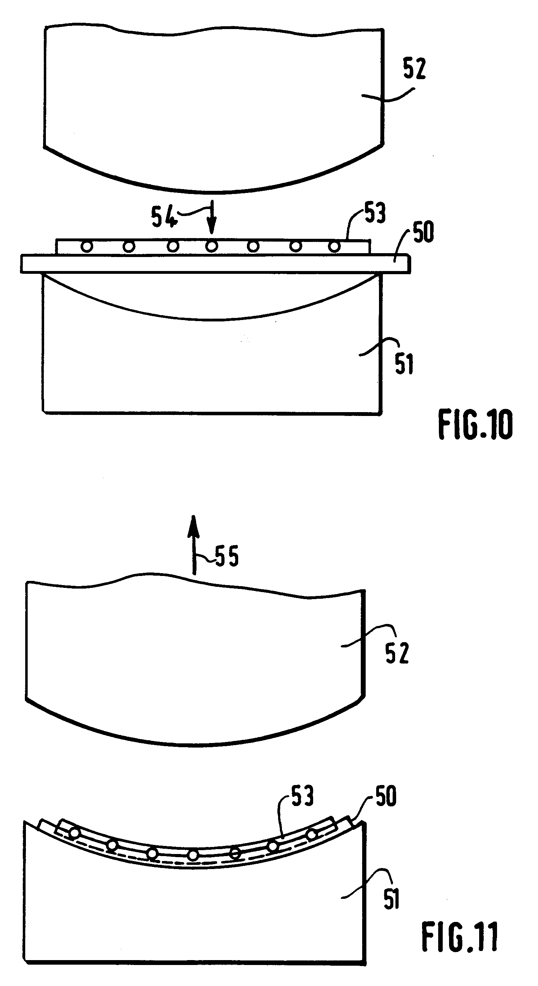

Dans chacun des modes de réalisation précités, les pièces ancrées dans la plaque peuvent alternativement être constituées d'une feuille ajourée 45, comme sur les figures 8 et 9.

La feuille 45 est une feuille de métal dur, par exemple d'acier, dans laquelle ont été pratiquées des ouvertures ou perforations 46, par exemple au moyen d'une presse.

Comme pour la grille, on peut varier à volonté la densité de perforation sur la feuille 45, en modifiant localement le nombre et/ou les dimensions des perforations.

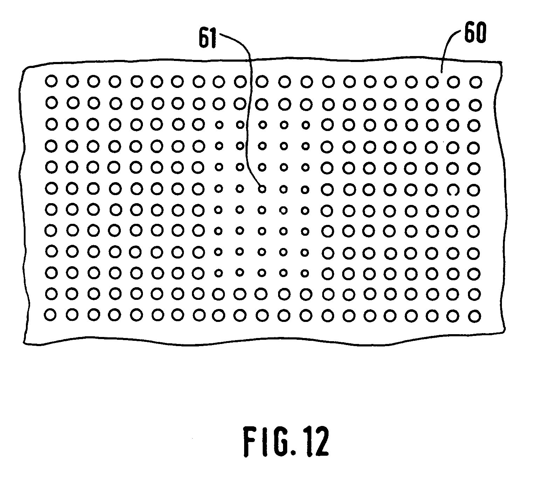

Par exemple, sur la figure 12, on a représenté une feuille perforée 60 dont la densité de perforation est faible en partie centrale en raison du faible diamètre des perforations 61 dans cette partie.

Les ouvertures représentées sur les figures 8 et 12 ont une forme circulaire. Cependant, les ouvertures peuvent avoir des formes variées, par exemple carrées, hexagonales, etc.

En référence à la figure 1 notamment, l'invention vise également un procédé pour améliorer les propriétés d'un élément de structure 1, notamment pour véhicule, comprenant une plaque 2 réalisée en un premier métal ou alliage relativement léger et mou.

Ce procédé correspond à l'élément de structure selon l'invention.

Selon l'invention, le procédé comprend une étape consistant à fixer dans une zone limitée prédéterminée d'une des faces de la plaque 2, une pièce 3, ayant la forme d'une feuille ajourée ou d'une grille réalisée en un second métal ou alliage plus dur que celui de la plaque, cette fixation étant effectuée par matriçage à froid, de sorte que le métal de la plaque 2 pénètre dans les ouvertures de la pièce 3.

Les caractéristiques précitées de l'élément de structure selon l'invention, sont valables également pour le procédé selon l'invention.

Les figures 10 et 11 présentent un mode avantageux de mise en oeuvre du procédé selon l'invention. La plaque 50 auquel il s'applique subit classiquement une opération de matriçage pour lui donner une forme prédéterminée.

On a représenté schématiquement en 51 la partie fixe de la presse utilisée pour cette opération et en 52 la partie mobile de la presse. L'opération consiste par exemple ici, à donner à la plaque 50 initialement plane une forme courbe.

Dans le présent mode de mise en oeuvre du procédé selon l'invention, la fixation de la pièce 53 ayant la forme d'une grille ou d'une feuille ajourée a lieu durant ladite opération de matriçage.

Ainsi, sur la figure 10, on a disposé la pièce 53 sur la plaque 50, elle-même disposée sur la partie fixe 51 de la presse. La pièce 53 et la plaque 50 ont alors une forme plane.

La flèche 54 indique la direction du mouvement de la partie mobile 52 vers la partie fixe 51 en vue du matriçage. Durant le matriçage, on donne à la plaque 50 ainsi qu'à la pièce 53 la courbure désirée et simultanément on enfonce la pièce 53 dans la plaque 50 pour obtenir la configuration précédemment décrite.

Le résultat de cette opération est représenté sur la figure 11, la flèche 55 indiquant le mouvement ascendant de la partie 52 qui s'éloigne après le matriçage.

L'un des principaux avantages de l'élément de structure et du procédé selon l'invention est que la pièce matricée sur la plaque augmente considérablement la résistance mécanique de celle-ci et donc de l'élément de structure.

Cependant, la pièce peut avoir une épaisseur sensiblement plus faible que celle de la plaque. L'ancrage de la pièce dans la plaque n'augmente donc pas le poids de l'élément de façon importante.

La pièce est fixée sur une zone limitée prédéterminée de la surface de la plaque. Cette zone est déterminée notamment en fonction des contraintes mécaniques auxquelles pourra être soumis l'élément de structure durant son utilisation. En effet, très souvent ces contraintes sont particulièrement fortes en certains endroits seulement de l'élément.

Le choix de la forme de la pièce et conjointement de la zone de la plaque à couvrir avec la pièce permettent de renforcer l'élément de structure dans les zones les plus soumises aux contraintes mécaniques, sans renforcer d'autres zones qui sont peu exposées aux contraintes.

Ainsi, dans l'exemple de la figure 1, on a désiré renforcer l'ensemble de la partie inférieure de la portière sans renforcer ses coins ni sa partie centrale. Au contraire, dans l'exemple de la figure 2, on a renforcé particulièrement les coins, les bords verticaux et le centre de la portière. La figure 7 donne un exemple de renfort de toute la partie centrale de la plaque et de ses coins.

A cet avantage, s'ajoute la possibilité de fixer plusieurs pièces séparées à la même plaque ou encore de varier la densité de perforation. Cette dernière caractéristique permet d'optimiser particulièrement le renfort de la plaque sans augmenter inutilement le poids de l'élément, en adaptant au plus près la densité de perforation aux contraintes exactes prévues dans les zones prédéterminées de l'élément.

L'invention sera avantageusement utilisée dans de nombreux domaines où une résistance mécanique importante et un poids faible sont recherchés tels que les véhicules terrestres, aériens et maritimes ou encore le bâtiment.

Bien entendu, on pourra apporter de nombreuses améliorations et modifications à l'invention sans sortir du cadre de celle-ci.

## Revendications

1. Elément de structure (1; 16; 60), notamment pour véhicule, comprenant une plaque (2; 30) réalisée en un premier métal ou alliage relativement léger et mou,
caractérisé en ce que la plaque (2, 30) présente sur une de ses faces dans une zone limitée prédéterminée de ladite face une pièce (3; 17; 35) ayant la forme d'une feuille ajourée (45) ou d'une grille (3) réalisée en un second métal ou alliage plus dur que celui de la plaque (2; 30), ladite pièce (3; 17, 22, 23, 24, 25 ; 31, 32, 33, 34, 35) étant fixée à la plaque (2; 30) par matriçage à froid de sorte que le métal de la plaque (2; 30) pénètre dans les ouvertures (6; 46) de la pièce (3; 17, 22, 23, 24, 25 ; 31, 32, 33, 34, 35).

2. Elément conforme à la revendication 1,
caractérisé en ce qu'au moins une partie (12, 13, 14, 15; 22, 23, 24, 25, 26, 27, 28) de la pièce (3; 17) présente une densité de perforations inférieure à d'autres parties de la pièce.

3. Elément conforme à l'une des revendications 1
ou 2, caractérisé en ce que la pièce présente au moins une partie évidé (11 ; 42).

4. Elément conforme à l'une des revendications 1 à 3, caractérisé en ce que la plaque (2 ; 30) présente au moins deux desdites pièces, ces pièces étant fixées sur la même face de la plaque (2; 30).

5. Elément conforme à l'une des revendications 1 à 3, caractérisé en ce que la plaque (2 ; 30) présente au moins deux desdites pièces, ces pièces étant fixées sur des faces différentes de la plaque.

6. Elément conforme à l'une des revendications 1 à 5, caractérisé en ce que le premier métal est de l'aluminium.

7. Elément conforme à l'une des revendications 1 à 6, caractérisé en ce que le second métal est de l'acier.

8. Procédé pour améliorer les propriétés d'un élément de structure (1; 16; 60), notamment pour véhicule, comprenant une plaque (2; 30; 50) réalisée en un premier métal ou alliage relativement léger et mou, caractérisé en ce qu'il comprend une étape consistant à fixer dans une zone limitée prédéterminée d'une des faces de la plaque (2; 30; 50), une pièce (3; 17, 22, 23, 24, 25 ; 31, 32, 33, 34, 35; 53) ayant la forme d'une feuille ajourée (45) ou d'une grille (3) réalisée en un second métal en alliage plus dur que celui de la plaque (2; 30; 50), cette fixation étant effectuée par matriçage à froid, de sorte que le métal de la plaque (2; 30; 50) pénètre dans les ouvertures (6; 46) de la pièce.

9. Procédé conforme à la revendication 8, la plaque (50) subissant une opération de matriçage pour lui donner une forme prédéterminée, caractérisé en ce que la fixation de la pièce (53) a lieu durant ladite opération de matriçage.

10. Procédé conforme à l'une des revendications 8 à 9, caractérisé en ce qu'on fixe sur la plaque au moins deux desdites pièces, ces pièces étant séparées l'une de l'autre.

## Claims

1. A structural element (1; 16; 60), more particularly for a vehicle, comprising a plate (2; 30) made of a first relatively light and soft metal or alloy, characterised in that the plate (2; 30) has, on one of its surfaces, in a predetermined limited zone of said surface, a part (3; 17; 35) in the form of a perforate sheet (45) or grid (3) made from a second metal or alloy harder than that of the plate (2; 30), the said part (3; 17, 22, 23, 24, 25; 31, 32, 33, 34, 35) being fixed to the plate (2; 30) by cold die-stamping so that the metal of the plate (2; 30) penetrates into the apertures (6; 46) of the part (3; 17, 22, 23, 24, 25; 31, 32, 33, 34, 35).

2. An element according to claim 1, characterised in that at least one portion (12, 13, 14, 15; 22, 23, 24, 25, 26, 27, 28) of the part (3; 17) has a perforation density less than other portions of the part.

3. An element according to any of claims 1 or 2, characterised in that the part has at least one recessed portion (11; 42).

4. An element according to any one of claims 1 to 3, characterised in that the plate (2; 30) has at least two of the said parts, said parts being fixed on the same surface of the plate (2; 30).

5. An element according to any one of claims 1 to 3, characterised in that the plate (2; 30) has at least two of said parts, said parts being fixed on different surfaces of the plate.

6. An element according to any one of claims 1 to 5, characterised in that the first metal is aluminium.

7. An element according to any one of claims 1 to 6, characterised in that the second metal is steel.

8. A method of improving the properties of a structural element (1; 16; 60), more particularly for a vehicle, comprising a plate (2; 30; 50) made of a first relatively light and soft metal or alloy, characterised in that it comprises a step wherein a part (3; 17, 22, 23, 24, 25; 31, 32, 33, 34, 35; 53) in the form of a perforate sheet (45) or a grid (3) made of a second metal or alloy harder than that of the plate (2; 30; 50) is fixed in a predetermined limited zone of one of the surfaces of the plate (2; 30; 50), said fixing being effected by cold die-stamping so that the metal of the plate (2; 30; 50) penetrates into the apertures (6; 46) of the part.

9. A method according to claim 8, the plate (50) undergoing a die-stamping operation to give it a predetermined shape, characterised in that fixing of the part (53) takes place during the said die-stamping operation.

10. A method according to claim 8 or 9, characterised in that at least two of the said parts are fixed on the plate, said parts being separated from one another.

## Patentansprüche

1. Strukturbauteil (1; 16; 60), insbesondere für Fahrzeuge, mit einer Platte (2; 30) aus einem ersten, verhältnismäßig leichten und weichen Metall oder Metallegierung, dadurch gekennzeichnet, daß die Platte (2, 30) auf einer ihrer Flächen in einem vorgegebenen, begrenzten Bereich dieser Fläche ein Teil (3; 17; 35) in Form eines Lochblechs (45) oder eines Gitters (3) aus einem zweiten, gegenüber dem der Platte (2; 30) härteren Metall oder Metallegierung aufweist, wobei das Teil (3; 17, 22, 23, 24, 25; 31, 32, 33, 34, 35) auf der Platte durch Kaltverformung befestigt ist, so daß das Metall der Platte (2; 30) die Öffnungen (6; 46) des Teils (3; 17, 22, 23, 24, 25; 31, 32, 33, 34, 35) durchdringt.

2. Bauteil nach Anspruch 1, dadurch gekennzeichnet, daß wenigstens ein Abschnitt (12, 13, 14, 15; 22, 23, 24, 25, 26, 27, 28) des Teils (3; 17) eine gegenüber anderen Abschnitten des Teils niedrigere Perforationsdichte aufweist.

3. Bauteil nach einem der Ansprüche 1 oder 2, dadurch gekennzeichnet, daß das Teil wenigstens einen ausgesparten Abschnitt (11; 42) aufweist.

4. Bauteil nach einem der Ansprüche 1 bis 3, dadurch gekennzeichnet, daß die Platte (2; 30) zwei dieser Teile aufweist, wobei die Teile auf derselben Fläche der Platte (2; 30) befestigt sind.

5. Bauteil nach einen, der Ansprüche 1 bis 3, dadurch gekennzeichnet, daß die Platte (2; 30) wenigstens zwei dieser Teile aufweist, wobei die Teile auf verschiedenen Flächen der Platte befestigt sind.

6. Bauteil nach einem der Ansprüche 1 bis 5, dadurch gekennzeichnet, daß das erste Metall Aluminium ist.

7. Bauteil nach einem der Ansprüche 1 bis 6, dadurch gekennzeichnet, daß das zweite Metall Stahl ist.

8. Verfahren zur Verbesserung der Eigenschaften eines Strukturbauteils (1; 16; 60), insbesondere für Fahrzeuge, mit einer Platte (2; 30; 50) aus einem ersten, verhältnismäßig leichten und weichen Metall oder Metallegierung, dadurch gekennzeichnet, daß das Verfahren einen ersten Schritt umfaßt, der darin besteht, in einem vorgegebenen, begrenzten Bereich einer der Flächen der Platte (2; 30; 50) ein Teil (3; 17, 22, 23, 24, 25; 31, 32, 33, 34, 35; 53) in Form eines Lochblechs (45) oder eines Gitters (3) aus einem gegenüber dem der Platte (2; 30; 50) härteren Metall zu befestigen, wobei diese Befestigung durch Kaltverformung stattfindet, so daß das Metall der Platte (2; 30; 50) die Öffnungen (6; 46) des Teils durchdringt.

9. Verfahren nach Anspruch 8, wobei die Platte (50) einem Verformungsprozess unterworfen wird, um eine vorgegebene Form zu erhalten, dadurch gekennzeichnet, daß die Befestigung des Teils (53) während dieses Verformungsprozesses stattfindet.

10. Verfahren nach einem der Ansprüche 8 bis 9, dadurch gekennzeichnet, daß man auf der Platte wenigstens eines der beiden Teile befestigt, wobei diese Teile voneinander getrennt sind.
